Europäisches Patentamt

(19) European Patent Office

Office européen des brevets

(11) Veröffentlichungsnummer: **0 251 221**
**B1**

(12) **EUROPÄISCHE PATENTSCHRIFT**

(45) Veröffentlichungstag der Patentschrift:
31.10.90

(21) Anmeldenummer: 87109173.2

(22) Anmeldetag: 26.06.87

(51) Int. Cl.⁵: **C02F 11/00, C02F 1/46**

(54) Verfahren zur Behandlung von organischen Schlämmen.

(30) Priorität: 28.06.86 DE 3621802

(43) Veröffentlichungstag der Anmeldung:
07.01.88 Patentblatt 88/1

(45) Bekanntmachung des Hinweises auf die Patenterteilung:
31.10.90 Patentblatt 90/44

(84) Benannte Vertragsstaaten:
AT BE CH DE FR GB IT LI LU NL SE

(56) Entgegenhaltungen:
CH-A- 249 877
DE-A- 3 300 544
FR-A- 1 321 895
FR-E- 82 434
NL-A- 7 406 870

(73) Patentinhaber: Brösamle, Peter, Dipl.-Ing.,
Lindenstrasse 18, D-2054 Wiershop(DE)

(72) Erfinder: Brösamle, Peter, Lindenstrasse 18,
D-2054 Wiershop(DE)
Erfinder: Hansberg, Gerald, Im Eggendahl 3,
D-4320 Hattingen(DE)
Erfinder: Heuer, Manfred, Laukshof 3,
D-4803 Steinhagen(DE)

(74) Vertreter: Mey, Klaus-Peter, Dr.-Ing. Dipl.-Wirt.-Ing.,
Patentanwälte
HEMMERICH-MÜLLER-GROSSE-POLLMEIER-MEY
Aachener Strasse 710, D-5020 Frechen 4(DE)

ACTORUM AG

# Beschreibung

Die Erfindung betrifft ein Verfahren zur Behandlung von organischen Schlämmen mit mindestens einer Elektrode sowie mindestens einer Gegenelektrode, an denen eine Gleichspannungsquelle anliegt, wobei unter Verwendung beliebiger Elektroden, mit Ausnahme von Kupferelektroden, eine Wanderung von Ionen im Schlamm angeregt wird.

Neben den insbesondere in Betrieben mit Nutztierhaltung anfallenden Güllen (Flüssigmist), fallen unter die organischen Schlämme Fäkalienschlämme jeglicher Art, d. h. auch Klärschlämme aus Kommunal- und Kleinkläranlagen, ferner Be- und Verarbeitungsrückstände aus Industrieanlagen, beispielsweise Schlämme aus Brennereien und Brauereien. Unter Gülle versteht man eine Mischung aus festen und flüssigen Tierausscheidungen in der Nutztierhaltung. Die Mischung aus Kot und Harn kann mit Reinigungs- und Oberflächenabwässern des Betriebes, mit Futterresten, Einstreu und sonstigen, bei der Nutztierhaltung anfallenden Abfallstoffen vermischt sein. Tierart- und haltungsbedingt kann Gülle Trockensubstanzgehalte von ca. 2,5 bis über 15 % aufweisen sowie in der Strukturzusammensetzung sehr unterschiedlich sein.

Bei der Verarbeitung von Güllen ergeben sich aus ökologischen, ökonomischen sowie aus arbeitstechnischen Erfordernissen längere Lagerzeiten. Auch pflanzenbaulich gesehen ist ein dem kontinuierlichen Anfall der Güllen angepaßtes Ausbringen wenig sinnvoll, wodurch sich gewisse Mindestlagerzeiten ergeben.

Während der Lagerung der Güllen ist, wie bei allen organischen Schlämmen, eine mehr oder weniger ausgeprägte Entmischung zu beobachten. Dabei bildet sich als oberste Schicht zumeist ein verhältnismäßig fester Güllekuchen, auch Schwimmschicht genannt, der bevorzugt zum Austrocknen und damit zur weiteren Verfestigung neigt. Ferner ist die Ausbildung einer Sedimentationsschicht (sogenannte Sinkschicht) zu beobachten, die mit zunehmender Lagerzeit ganz enorm verbacken kann und dann nur mit deutlich erhöhtem Maschineneinsatz aus dem Lagerbehälter zu entnehmen ist, was auch für deutlich ausgeprägte Schwimmschichten zutrifft.

Die Lagerzeiten für Güllen betragen, da vom Gesetzgeber zunehmend vorgeschrieben, sechs und mehr Monate. Es muß daher eine bestimmte, den Betriebserfordernissen angepaßte Lagerkapazität eingerichtet werden. Hierbei wird nicht nur die durchschnittlich pro Tier und Tag anfallende Flüssigmistmenge zugrundegelegt, sondern es ist auch notwendig, Zuschläge für die während der Lagerzeit möglicherweise eintretende Volumenvergrößerung der Güllen vorzusehen, die je nach Gülleart und Jahreszeit bis ca. 25 % des Rohvolumens betragen kann.

Beim Entstehen, der Be- und Verarbeitung von Güllen bilden sich zuweilen übelriechende Gase, so daß die Unterhaltung bzw. Neuansiedlung von Wirtschaftsbetrieben mit Gülleanfall in der Nähe bzw. im Immissionsfeld von Wohnsiedlungen auf besondere Schwierigkeiten stößt. Hierbei ist zunehmend nicht nur der direkte Ort der Produktion und der Zwischenlagerung der Güllen zu berücksichtigen, sondern insbesondere auch das gesamte landwirtschaftlich genutzte Areal, auf dem die Güllen als hochwertiger Pflanzendünger ausgebracht wird.

Aus der deutschen Patentschrift 32 42 124 ist ein gattungsgleiches Verfahren zur Behandlung von Flüssigmist bekannt, bei dem Kupferelektroden zur Emission von Kupferionen in den Flüssigmist verwendet werden. Bei Kupfer handelt es sich um ein umweltbelastendes und relativ teures Elektrodenmaterial. Außerdem ist Kupfer als Stabilisator für bestimmte Futtermittelkomponenten schon in reichlichem Umfang in vielen Güllen enthalten. Der erhöhte Kupferanteil im Flüssigmist wird auch von der Landwirtschaft zunehmend als umweltschädigend eingestuft.

In der schweizerischen Patentschrift CH-A 249 877 wird ein Verfahren zur Behandlung von Abwasser unter Anwendung von beliebigen Elektroden – mit Ausnahme von Kupfer – unter Gleichspannung offenbart, bei dem es im wesentlichen um die Nachreinigung bereits mechanisch und biologisch vorgereinigter Abwässer geht und wobei das Absetzverhalten der Verunreinigungen verbessert werden soll. Eine unmittelbare Behandlung organischer Schlämme, insbesondere zur Homogenisierung von Gülle bzw. nicht fließfähigen Klärschlämmen ist hierbei nicht vorgesehen.

Aus der deutschen Offenlegungsschrift DE-A1 33 00 544 ist ein Verfahren zur Verbesserung des Absetzverhaltens von Faulschlamm bekannt, bei dem der Faulschlamm nach Entnahme aus dem Faulbehälter mit chemischen Oxidationsmitteln oder durch elektrochemische Anhebung des Redoxpotentials behandelt wird. Eine Verbesserung der Homogenisierung, Verhinderung der Volumenvergrößerung oder Reduzierung der Geruchsbildung von Klärschlamm oder Gülle wird hierbei weder angestrebt noch bewirkt.

Der Erfindung liegt daher die Aufgabe zugrunde, unter Vermeidung der obengenannten Nachteile ein Verfahren zur Behandlung von Güllen bzw. nicht fließfähigen abgesetzten Klärschlämmen anzugeben, mit dem auf einfache und kostengünstige Weise insbesondere eine deutliche Geruchsreduzierung bei zu Düngezwecken ausgebrachten Güllen, eine deutliche Verbesserung der Homogenität am Ende von verfahrensbedingten Zwischenlagerzeiten erreicht sowie die unerwünschte Volumenvergrößerung des Flüssigmistes bei längerer Lagerzeit verhindert werden kann.

Diese Aufgabe wird erfindungsgemäß dadurch gelöst, daß die anzulegende Gleichspannung 50 V nicht überschreitet und die Stromstärke in einem Bereich zwischen etwa 0,1 A und etwa 10 A eingestellt wird. Dabei können die Ionen auch zum Schwingen um eine Nullage in dem zu behandelnden Schlamm gebracht werden. Überraschenderweise wurde festgestellt, daß durch das beschriebene Mobilisieren von beliebigen in Güllen bzw. nicht fließfähigen abgesetzten Klärschlämmen enthaltenen Ionen auch eine Strukturzerstörung von Grobpartikeln und bei Überschichtung mit Wasser eine absolut gleichmäßige Einmischung desselben erfolgt, was je alleine und auch in Verbindung miteinander die vor dem Entnehmen notwendigerweise erwünschte Homogenisierung der organischen Schlämme ganz wesentlich vereinfacht. Ebenfalls konnte festgestellt werden, daß durch die beschriebene erfindungsgemäße Behandlung die unerwünschte Volumenvergrößerung praktisch vollständig unterbleibt. Ferner wird auch die störende Geruchsemission des Flüssigmistes ganz wesentlich herabgesetzt, d. h. deutlich unter 50 % (gemessen ca. 30 Minuten nach einem breitflächigen Ausbringen der behandelten Gülle als hochwertiger Dünger). Ergänzend konnte festgestellt werden, daß mit Anwendung des Verfahrens im Stall, also bei Zwischenlagerung von Gülle unter den Nutztieren, eine eindeutige Verbesserung des Stallklimas eintritt, angenehm ergänzt durch die deutliche Reduktion der Fliegenpopulation im Stallraum. Endlich ist auch festgestellt worden, daß der Einsatz von beliebigen Metallelektroden - ausgenommen sind Kupferelektroden - die beschriebenen erwünschten Effekte deutlich beschleunigen und/oder verstärken kann durch das damit verbundene Emittieren von zusätzlichen Ionen aus den Elektroden. Die erfindungsgemäß behandelte Gülle eignet sich, bedingt durch die gute Homogenität, auch vorzüglich für den Einsatz in Biogas-Anlagen.

In einer bevorzugten Ausgestaltung des erfindungsgemäßen Verfahrens werden als Elektroden inerte Materialien, vorzugsweise Graphite oder leitende Kunststoffe verwendet, deren hauptsächlicher Vorteil darin liegt, daß sie nicht oder nur selten ersetzt werden müssen, wodurch die Betriebskosten erheblich gesenkt werden können.

Darüber hinaus können als Elektrodenmaterialien Eisen, Aluminium oder deren Legierungen verwendet werden. Eisen ist in seinen Handelsformen als Verbrauchsmaterial für Elektroden, beispielsweise als Baustahl oder Grauguß, besonders preisgünstig und zudem auch bei einem teilweisen Verbleib im Flüssigmist als umweltfreundlich einzustufen und für die menschliche Gesundheit unbedenklich, selbst wenn es in die Nahrungskette gelangen sollte. Aluminium kann wie Eisen auch als besonders umweltfreundlich angesehen werden.

Zweckmäßigerweise wird für Elektroden und Gegenelektroden gleiches Material verwendet. Neben Kostenvorteilen bei der Lagerhaltung können derartige Elektrodensysteme auf einfache Weise umgepolt werden, um die Wanderungsrichtung der Metallionen umzukehren.

Die Erfindung sieht vor, daß die anzulegende Gleichspannung 50 V nicht überschreitet, gemessen zwischen den Polen der Spannungsquelle. Auf diese Weise bleibt die Arbeitsspannung immer bis zu 70 % unterhalb der gesetzlich erlaubten Körperspannung von 70 Volt.

Zweckmäßigerweise wird die eingeleitete Stromstärke in einem Bereich zwischen etwa 1 bis 6 A eingestellt. Gute Homogenisierungserfolge lassen sich in diesem Bereich bei Inert- und Eisenelektroden, abhängig von der Behältergröße und der Elektrodenfläche erreichen.

In einer vorteilhaften Weiterbildung der Erfindung ist vorgesehen, daß die anliegende Spannung bei einem Stromfluß von noch etwa 70 - 30 % des Nennstromes vorzugsweise bei 50 % umgepolt wird. Dabei ist die Wanderungszeit der Metallionen zwischen den Elektroden im allgemeinen länger als das Schaltintervall. Auf diese Weise kann man die Abnutzungszeit der Elektroden verlängern, da die beiden Elekroden wechselseitig als Kathode und als Anode geschaltet werden. Die Passivierung der Elektroden wird dadurch stark verzögert.

In einer vorteilhaften Ausgestaltung der Erfindung wird die anliegende Spannung nach einem konstanten Zyklus umgepolt, vorzugsweise im Verhältnis 90 % zu 10 %, d. h. beispielsweise etwa nach 18 und 2 Minuten. Ein Zyklus umfaßt den Zeitraum bis zu einer Umpolung sowie den Zeitraum bis zur Rückpolung. Auf diese Weise wird die Effizienz der erfindungsgemäßen Verfahrensweise gesteigert und gegebenenfalls der Elektrodenverbrauchszeitraum verlängert.

Alternativ dazu kann nach der Erfindung die anliegende Spannung auch nach einem konstanten Zeitraum umgepolt werden, vorzugsweise in einem Zeitabstand von 0,001 bis 60 Sekunden. Hierbei handelt es sich um eine besonders einfache Ausgestaltung des erfindungsgemäßen Verfahrens, wobei große Erfolge bei einer Umpolung im Zeittakt von etwa 1 Sekunde erzielt wurden. Die Elektrodenabnutzung kann auf diese Art minimiert werden.

Mit der Erfindung ist ferner vorteilhaft vorgesehen, daß der Stromfluß zeitweilig unterbrochen wird, vorzugsweise über einen Zeitraum von etwa 20-50 % der gesamten Behandlungsdauer. Auf diese Weise können Betriebskosten eingespart werden, wobei die kürzere Abschaltzeit vornehmlich für Schlämme mit hohem Trockensubstanzgehalt gilt, während die größere Einsparung bei Schlämmen mit hohem Flüssigkeitsanteil eingestellt werden kann. Darüber hinaus kann es auch zweckmäßig sein, wenn der Stromfluß in konstanten Intervallen unterbrochen wird. Hierbei wird eine technisch besonders einfache und damit kostengünstige Verfahrensweise zur Einsparung von Stromkosten aufgezeigt.

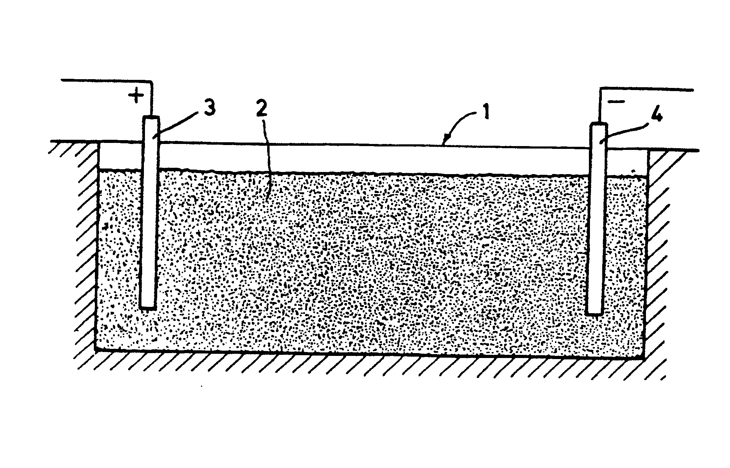

Nachfolgend wird die Erfindung anhand eines in der Zeichnung schematisch dargestellten Ausführungsbeispieles näher erläutert. Die Zeichnungsfigur zeigt dabei einen Längsschnitt durch einen Schlammbehälter (1) mit zwei darin eintauchenden Elektroden (3, 4). Der Behälter (1), in der Regel ein größerer Lagertank, nimmt den organischen Schlamm (2) auf. An beiden Wänden des Behälters (1) tauchen die Anode (3) und die Kathode (4) in den Behälter (1) ein und sind mit den beiden Polen einer Niederspannungs-Gleichstromquelle (nicht dargestellt) verbunden. Zumindest die als Anode (3) geschaltete Elektrode kann aus Metall, z. B. aus Eisen, bestehen, die andere Elektrode (4) kann aus einem beliebigen anderen Material sein. In bestimmten und näher erläuterten Fällen ist es aber günstig, auch für diese Elektrode (4) z. B. Eisen als Material zu verwenden.

Das Behandlungsverfahren wird so geführt, daß zwischen den beiden Elektroden (3, 4) ein Strom fließt, wobei die Stromstärke zwischen 0,1 und 10 A liegen kann, vorzugsweise in der Größenordnung von 1 bis 6 A. Dabei bleibt die zum Aufbau der erwünschten Stromstärke zwischen den Elektroden (3, 4) notwendigerweise anzulegende Niederspannung unter der Gasungsspannung des zu behandelnden Schlamms (2), wenn der Elektodenabstand dies zuläßt, andernfalls wird die Spannung geringfügig über diesen Wert hinaus erhöht. Bei Güllen setzt diese Behandlung vorzugsweise unmittelbar nach dem Anfall ein und kann nach einer vorteilhaften Ausgestaltung der Erfindung während der Zwischenlagerung deutlich reduziert oder sogar unterbrochen werden.

Günstig ist, wie bereits erwähnt, eine Ausgestaltung, bei der beide Elektroden aus dem gleichen Metall bestehen. Im Falle emittierender Metallelektroden können diese dann zur Erhöhung der Standzeit der Anlage von Zeit zu Zeit umgepolt werden. Sollen durch die Metallelektroden zusätzliche Metallionen in die Schlämme emittiert werden und dann darin zur Wanderung an die Gegenelektroden angeregt werden, muß die Umpolung so erfolgen, daß die Rückpolungszeit kleiner ist, d. h. beispielsweise 18 Minuten in einer Richtung und 2 Minuten zurück.

Besondere Umstände - extreme Sink- und/oder Schwimmschichten - können eine befristete Anhebung der Stromstärke bis zu dem Wert erforderlich machen, der sich einstellt, wenn der gesetzlich erlaubte Höchstwert der anzulegenden Schwachstrom-Spannung erreicht wird.

Das erfindungsgemäße Verfahren kann mit beliebigen Elektrodenanordnungen in dem Flüssigmistbehälter durchgeführt werden, der im übrigen auch eine beliebige, beispielsweise eine kreiszylindrische Form haben kann, wobei die eine Elektrode als längs der Wand verlaufende Ringelektrode und die andere als stabförmige Mittelelektrode ausgebildet sein kann. Durch die Anordnung einer größeren Anzahl von Hilfselektroden zwischen den Hauptelektroden erhält man eine erfindungsgemäße Behandlung organischer Schlämme auch in sehr großen Behältern, außerdem wird die Zeitdauer der Wanderung der Ionen von einer Elektrode zur benachbarten Elektrode herabgesetzt, so daß die Umpolung zur Erhöhung der Effizienz des Verfahrens häufiger stattfinden kann.

Wie bereits erwähnt, ist die Verhinderung der Geruchsemissionen nach dem Ausbringen der Gülle und der Volumenvergrößerung am wirksamsten, wenn die erfindungsgemäße Behandlung unmittelbar nach Anfall des Flüssigmistes beginnt. Es ist dabei günstig, wenn bereits in dem dem Stall zugeordneten Sammelbehälter Elektroden der beschriebenen Art angeordnet sind. Solche Elektroden können dann auch in den Kanälen vorgesehen sein, die den Frischmist aus diesen Sammelbehältern in die nomalerweise entfernt angeordneten Lagerbehälter transportieren, und selbstverständlich werden Behandlungsanordnungen der beschriebenen Art in diesen Lagerbehältern selbst vorgesehen werden.

Anhand von Versuchen wird im folgenden nachgewiesen, welche überraschenden Resultate die erfindungsgemäße Behandlung von Flüssigmist ergibt.

Beispiel 1:

In einem rechteckigen Behälter mit 200 Litern dickbreiiger, nicht rührfähiger Bullenmastgülle wurden in zwei diagonal gegenüberliegenden Ecken Eisenstäbe als Elektroden angeordnet in einer Entfernung von 1400 mm. Bei einer angelegten und konstant geregelten Gleichspannung von 16,4 Volt floß anfänglich ein Nennstrom von 2 Ampere. Eine Umpolung erfolgte alle 30 Minuten. Bis zum 15. Tag blieben die Verhältnisse nahezu konstant, ab dem 16. bis zum 21. Tag verringerte sich der Stromfluß bis auf einen Wert von 1,2 A. Die Gülle war leichtflüssig und bis in den Bodenbereich des Behälters rührfähig. Damit hatte sich die Fließfähigkeit der Gülle deutlich verbessert, lange Fasern hatten sich aufgelöst. Das Volumen wurde um ca. 20 % reduziert, gekennzeichnet durch eine Höhenabnahme der Behälterfüllung von 420 auf 350 mm. Die Geruchsentwicklung war deutlich verringert. Auch nach einer Stromabschaltung vom 22. bis zum 31. Tag blieb die Konsistenz der Gülle unverändert.

Beispiel 2:

Mehrere 10-Liter-Plastikeimer wurden mit je 8 Litern Kuhgülle gefüllt, wobei ein zäher Güllekuchen auf dem ansonsten dickflüssigen Brei aufschwamm. Jeweils drei unbehandelte und drei mit Kupfersulfatpulver behandelte Proben zeigten bei starker Geruchsentwicklung eine Volumenvergrößerung von etwa 10 % nach 8 - 10 Tagen. Jeweils drei mit Fe-Elektroden (Umpolung im 3-Stunden Intervall) und drei zusätzlich mit Kupfersulfatpulver behandelte Proben ergaben nach der gleichen Behandlungszeit eine dünnflüssige homogenisierte Gülle, bei konstantem Volumen und deutlich verminderter Geruchsentwicklung. Auf den Elektroden schied sich ein fester, poröser Belag ab. Die Kupfersulfatbehandlung alleine ergab keinen signifikanten Unterschied.

Beispiel 3:

Jauche, mit kleingeschnittenem Heu durchmischt, wurde in gleicher Weise behandelt, wie unter Beispiel 2 ausgeführt. Bei den unbehandelten Proben schwamm das Heu nach kurzer Zeit oben auf. Nach starker Geruchsentwicklung ergab sich nach 8 Tagen eine Volumenvergrößerung von wiederum etwa 10 %. Die gemäß dem Verfahren nach der Erfindung behandelten Proben zeigten die gleichen vorteilhaften Wirkungen wie unter Beispiel 2 beschrieben. Das eingemischte Heu blieb gleichmäßig in der Gülle verteilt und entmischte sich nicht.

Beispiel 4:

Vergleichsversuche zwischen verschiedenen Elektrodenmaterialien ergaben keine wesentlichen Unterschiede bezüglich einer Passivierung der Kathoden. Jeweils zwei Eisen-, zwei Kupfer- und zwei Aluminium-Elektroden wurden, in mehreren mit jeweils 7 Litern Gülle gefüllten Eimern, unter Strom gesetzt und 9 Tage beobachtet. Bei den Fe-/Cu-/Al-

Elektroden betrug die Spannung 7/5/5 Volt und der Anfangsstromfluß 420/280/200 Milliampere. Am 2. Tag änderte sich der Stromfluß auf 430/280/200, am 4. Tag auf 400/220/180, am 6. Tag auf 420/210/140, am 9. Tag verringerte sich der Stromfluß auf 320/180/120 Milliampere, entsprechend etwa 74/64/60 Prozent des Ausgangsstromes.

Beispiel 5 :

Bei einer kommunalen Fäkal- Kläranlage trat das Problem auf, daß im Vorklärbecken hinter dem Einlauf neben einer üblichen Sandablagerung direkt unter dem Zulauf im gesamten Becken eine an sich erwünschte Sinkschicht aus organischem Schlamm aufgebaut wurde, die sich dann von unten her (und das war das eigentliche Problem der Anlage) in der Zeit zwischen den Schlammentnahmen (diese Zeitspanne beträgt gegebenenfalls mehr als sechs Monate) so stark verfestigt hatte und dazu noch durch Wasserauspressung austrocknete, so daß sie Spaten-stichfest wurde. Der nicht mehr pumpfähige Schlamm konnte auch durch die Zugabe von Wasser nur punktförmig fließfähig gemacht werden, so daß Bagger-ähnliches Räumgerät eingesetzt werden mußte. Insgesamt entstanden sehr bedeutende Zusatzkosten neben nicht kalkulierten langen Räumzeiten.

Das Ergebnis nach zirka vier Wochen erfindungsgemäßer Behandlung mit Eisenelektroden war eine eindeutig fortschreitende Durchfeuchtung und damit Aufweichung der Sinkschicht. Diese aufgeweichte Schlammschicht konnte leicht mit der überstehenden wässrigen Flüssigkeit vermischt und danach abgefahren werden. Verwendet wurden drei Eisenlektroden als Kathoden und drei als Anoden sowie eine Einkreisanlage mit 100 VA zur Stromversorgung. Die Stromstärke betrug im Mittel 2,5 Ampere bei einer Umpolung der Elektroden im 18:2-Minuten-Takt.

Beispiel 6:

Hierbei handelte es sich um einen Labortest mit Hühnergülle und das Einmischen von Wasser. Bei Hühnergülle aus Batteriehalterungen ist der Trockensubstanzgehalt so hoch, daß für die Weiterverarbeitung der Gülle als Pflanzendünger im Agrarbereich unbedingt Wasser zugesetzt werden muß. Dies bedeutet hohe Maschinen- und Personalkosten für das Einmischen selbst und daneben eine ganz enorme Geruchsemission. Dazu kommt, daß gerade Hühnergülle ganz extrem zur Ausbildung von Sink- und Schwimmschichten neigt, mit den bekannten Handhabungserschwernissen.

Versuchsweise wurden vier gleiche Kunststoffbehälter mit jeweils 10 Litern frischer Hühnergülle aus einer Batteriehaltung (mit Schubstangenentmistungsanlage) gefüllt. Die Konsistenz der Gülle war bei der Entnahme dick-pastös. Ein Behälter (B1) wurde zur Kontrolle nur abgedeckt, aber nicht behandelt. Drei Behälter (B2-B4) wurden jeweils mit 20-Vol.-% Wasser, also 2 Litern, vorsichtig überschichtet. der Behälter B2 diente als Kontrolle und wurde, wie die mit dem erfindungsgemäßen Verfahren dann behandelten Behälter (B3, B4) ohne Abdeckung aufgestellt. Der Behälter B3 wurde mit zwei Inertelektroden aus Kohlenstoff versehen, die auf maximal möglichen Abstand gesetzt wurden. In den Behälter B4 wurden Elektroden aus Eisen eingesetzt. Die Materialverfügbarkeit ergab ein Oberflächenverhältnis der unterschiedlichen Elektrodenpaare von Eisen zu Kohle von 2:1.

Bei Behandlungsbeginn wurde eine Gleichspannung von 2 V eingestellt. Im Behälter B3 (Kohleelektroden) ergab sich eine Stromstärke von etwa 0,2 A und im Behälter B4 (Eisenelektroden) von 0,5 A. Nach 16 Stunden Behandlungszeit war in den Behältern B3 und B4 das Wasser deutlich trübe, während in dem unbehandelten Behälter B2 das Wasser noch klar war. Die Behandlungsintensität wurde danach verändert. Bei den Kohlenstoffelektroden (B3) wurde eine Gleichspannung von 10 V bei einem Behandlungsstrom von etwa 2,3 A, bei den Eisenelektroden (B4) auf 10 V bei ca. 3 A eingestellt. Nach weiteren etwa fünf Stunden Behandlungszeit mit der neuen Einstellung war in beiden Behältern (B3, B4) das Wasser mit dem untergeschichteten pastösen Schlamm vermischt. Beim Kontrollversuch (B2) war eine leichte Einmischung des Wassers in etwa 1 cm der oberen Schlammzone festzustellen.

Beispiel :7

Es handelte sich hierbei um einen Laborversuch zur Prüfung der Strukturzersetzung von Gülle mit einer stark wasserhaltigen Aufschwemmung von Feststoffpartikeln unterschiedlichster Größe, die dominierend organischer Herkunft waren und einem weiteren Anteil mineralischer Partikel, wobei aus beiden Fraktionen bestimmte Komponenten in Lösung gehen konnten.

In einem ca. 20 Liter fassenden Kunststoffbehälter wurden etwa 15 Liter dicke, stark mit Strohresten durchsetzte Rindergülle einer Behandlung mit Schwach-Gleichstrom ausgesetzt, wobei inerte Elektroden in Form von Kohlestäben verwendet wurden. Nach einer Behandlungszeit von zirka 14 Tagen waren die organischen Strukturen vergleichsweise zerstört.

Es bleibt festzuhalten, daß die ganz wesentliche Verbesserung der Homogenität von Güllen durch das Einleiten von Niederspannungs-Gleichstrom über sich nicht verbrauchende Inertelektroden ebenso erzielt werden kann, wie durch Einsatz von Metallelektroden.

Die erfindungsgemäßen Maßnahmen sind nicht auf das in der Zeichnungsfigur dargestellte Ausführungsbeispiel oder die anderen genannten Beispiele und Versuchsanordnungen beschränkt. So können beispielsweise, ohne den Rahmen der Erfindung zu verlassen, auch Rohrelektroden mit mittig angeordneten Gegenelektroden verwendet werden, um beispielsweise Brennereischlämme während der Förderung aus bzw. in einen Lagerbehälter gemäß der Erfindung zu homogenisieren.

## Patentansprüche

1. Verfahren zur Behandlung von organischen Schlämmen mit mindestens einer Elektrode sowie mindestens einer Gegenelektrode, an denen eine Gleichspannungsquelle anliegt, wobei unter Verwendung beliebiger Elektroden, mit Ausnahme von Kupferlelektroden, eine Wanderung von Ionen im Schlamm angeregt wird, dadurch gekennzeichnet, daß zur Verbesserung der Homogenisierung, Verhinderung der Volumenvergrößerung und Geruchsreduzierung bei Güllen bzw. nicht fließfähigen abgesetzten Klärschlämmen, die mit Grobstrukturen aus Futterresten, Einstreu oder sonstigen Abfallstoffen vermischt sind, die anzulegende Gleichspannung 50 V nicht überschreitet und die Stromstärke in einem Bereich zwischen etwa 0,1 A und etwa 10 A eingestellt wird.

2. Verfahren nach Anspruch 1, dadurch gekennzeichnet, daß die Stromstärke im Bereich zwischen 1 bis 6 A eingestellt wird.

3. Verfahren nach Anspruch 1 oder 2, dadurch gekennzeichnet, daß die anliegende Gleichspannung bei einem Stromfluß von etwa 70-30% des Nennstromes, vorzugsweise bei 50% umgepolt wird.

4. Verfahren nach Anspruch 1 oder 2, dadurch gekennzeichnet, daß die anliegende Spannung nach einem konstanten Zyklus umgepolt wird, vorzugsweise im Verhältnis 90% zu 10%.

5. Verfahren nach Anspruch 1 oder 2, dadurch gekennzeichnet, daß die anliegende Spannung nach einem konstanten Zeitraum umgepolt wird, vorzugsweise in einem Zeitabstand von 0,001 bis 60 Sekunden.

6. Verfahren nach einem oder mehreren der Ansprüche 1 bis 5, dadurch gekennzeichnet, daß der Stromfluß zeitweilig unterbrochen wird.

7. Verfahren nach einem oder mehreren der Ansprüche 1 bis 6, dadurch gekennzeichnet, daß als Elektroden inerte Materialen, vorzugsweise Graphite oder leitende Kunststoffe, verwendet werden.

8. Verfahren nach einem oder mehreren der Ansprüche 1 bis 7, dadurch gekennzeichnet, daß als Elektrodenmaterialien Eisen, Aluminium oder deren Legierungen verwendet werden.

9. Verfahren nach einem oder mehreren der Ansprüche 1 bis 8, dadurch gekennzeichnet, daß für Elektroden und Gegenelektroden gleiches Material verwendet wird.

## Claims

1. A process for treating organic sludges using at least one electrode and at least one counterelectrode to both of which a direct-current source is applied, a migration of ions in the sludge being activated when any electrodes excluding copper electrodes are used, characterized in that in order to improve homogenization, prevent an increase in volume and reduce odour with liquid manure and non-flowable, deposited clear-sludges which are mixed with coarse structures from fodder remains, litter or other waste products, the direct current to be applied does not exceed 50 V and the current intensity is set at a level in an approximate range of 0.1 A and 10 A.

2. A process in accordance with Claim 1, characterized in that the current intensity is set at a level in the 1 to 6 A range.

3. A process in accordance with Claim 1 or 2, characterized in that the polarity of the applied direct-current is changed at a current flow of approximately 70-30% of the rated current, preferably 50%.

4. A process in accordance with Claim 1 or 2, characterized in that the polarity of the applied voltage is changed in accordance with a constant cycle, preferably in the ratio 90% to 10%.

5. A process in accordance with Claim 1 or 2, characterized in that the polarity of the applied voltage is changed in accordance with a constant time gap, preferably at an interval of 0.001 to 60 seconds.

6. A process in accordance with one or more of Claims 1 to 5, characterized in that the current flow is temporarily interrupted.

7. A process in accordance with one or more of Claims 1 to 6, characterized in that inert materials are used as electrodes, preferably graphite or conductive plastics.

8. A process in accordance with one or more of Claims 1 to 7, characterized in that iron, aluminium or alloys thereof are used as electrode materials.

9. A process in accordance with one or more of Claims 1 to 8, characterized in that the same material is used for the electrodes and the counterelectrodes.

## Revendications

1. Procédé de traitement de boues organiques avec au moins une électrode ainsi qu'au moins une contre-électrode, auxquelles on applique une tension continue, en utilisant des électrodes quelconques, sauf des électrodes en cuivre, en provoquant une migration d'ions dans la boue, caractérisé en ce que pour améliorer l'homogénéisation, empêcher l'augmentation de volume et réduire l'odeur de lisiers ou bien de boues de clarification sédimentées ne coulant pas qui sont mélangées à des structures grossières de restes d'aliments, de litière et autres déchets, la tension de courant continu appliquée ne dépasse pas 50 V, et l'intensité de courant est réglée dans un intervalle compris entre environ 0,1 A et 10 A.

2. Procédé selon la revendication 1, caractérisé en ce qu'on règle l'intensité du courant entre 1 et 6 A.

3. Procédé selon la revendication 1 ou 2, caractérisé en ce qu'on inverse la polarité de la tension continue de préférence à 50%, pour une intensité d'environ 70-30% du courant nominal.

4. Procédé selon la revendication 1 ou 2, caractérisé en ce qu'on inverse la polarité de la tension appliquée selon un cycle constant, de préférence dans un rapport de 90% à 10%.

5. Procédé selon la revendication 1 ou 2, caractérisé en ce qu'on inverse la polarité de la tension appliquée après un intervalle de temps constant, de préférence après un intervalle de temps de 0, 001 à 60 secondes.

6. Procédé selon l'une ou plusieurs des revendications 1 à 5, caractérisé en ce qu'on interrompt temporairement le passage du courant.

7. Procédé selon l'une ou plusieurs des revendications 1 à 6, caractérisé en ce qu'on utilise comme électrodes des matériaux inertes, de préférence du graphite ou des matières plastiques conductrices.

8. Procédé selon l'une ou plusieurs des revendications 1 à 7, caractérisé en ce qu'on utilise comme matériaux d'électrodes du fer, de l'aluminium ou leurs alliages.

9. Procédé selon l'une ou plusieurs des revendications 1 à 8, caractérisé en ce qu'on utilise le même matériau pour les électrodes et les contreélectrodes.